# EUROPEAN PATENT SPECIFICATION

(11) **EP 3 696 029 B1**
(45) Date of publication and mention of the grant of the patent: **16.03.2022**
(21) Application number: 20156372.3
(22) Date of filing: 10.02.2020
(51) Int. Cl.: B60R 21/20, B60R 21/231

(54) **ARMREST BOX SAFETY AIRBAG SYSTEM AND OPERATING METHOD THEREOF**
ARMLEHNENKASTENSICHERHEITSAIRBAGSYSTEM UND BETRIEBSVERFAHREN DAFÜR
SYSTÈME DE SAC GONFLABLE DE SÉCURITÉ DE BOÎTE D'ACCOUDOIR ET SON PROCÉDÉ DE FONCTIONNEMENT

(30) Priority: 12.02.2019 CN 201910111005
(43) Date of publication of application: 19.08.2020
(73) Proprietor: Ford Global Technologies, LLC, Dearborn, MI 48126 (US)
(72) Inventor: WANG, Bob, Nanjing 211100 (CN); MA, Qingsong, Nanjing 211100 (CN); ZHU, Leon, Nanjing 211100 (CN); YIN, Laurence, Nanjing 211100 (CN); TONG, Adrian, Nanjing 211100 (CN)
(74) Representative: Haseltine Lake Kempner LLP

(56) References cited:
- DE-A1- 10 253 472
- DE-A1-102018 002 853
- US-A1- 2010 264 629
- US-A1- 2018 201 211
- US-B1- 9 821 746

## Description

### Technical field

The present invention relates to an armrest box safety airbag system and an operating method thereof.

### Background

When a vehicle suffers a lateral collision, a passenger or the driver will move transversely inside the vehicle. For example, when the passenger side of the vehicle suffers a collision, the upper half of the driver's body will move in a direction opposite to that of the collision, i.e. towards the passenger side of the vehicle, due to the effect of inertia. Thus, the driver might come into contact with the passenger.

US 8210566 B2 has disclosed an airbag apparatus that is arranged between vehicle seats and located at a rear region of a middle armrest box. When a lateral collision occurs, the airbag apparatus opens an airbag to restrain the movement of the driver or passenger in a transverse direction. Document US2018201211 A1 discloses an armrest box assembly, comprising: an armrest box body, comprising a receiving space having an opening; a first cover disposed above the armrest box body and moveable relative to the armrest box body, the first cover being moveable between a first deflected position and a second deflected position; a safety airbag disposed in the first cover; wherein in the first deflected position, an upper surface of the first cover is deflected by a first angle relative to a bottom face of the armrest box body at a first side of the armrest box body, in order to provide support in a first direction as the safety airbag is opening; and in the second deflected position, the upper surface of the first cover is deflected by a second angle relative to the bottom face of the armrest box body at a second side of the armrest box body, in order to provide support in a second direction as the safety airbag is opening.

### Summary of the invention

According to one aspect of the present invention, an armrest box safety airbag system according to claim 1 is provided.

In one embodiment, the armrest box assembly further comprises a second cover disposed below the first cover, a connecting rod mechanism disposed between the first cover and the second cover, and an actuator connected to the connecting rod mechanism, the second cover being moveably connected to the armrest box body in order to open and close the opening.

In another embodiment, the second cover comprises a recess for receiving the connecting rod mechanism and the actuator.

In another embodiment, the connecting rod mechanism comprises a first connecting rod mechanism close to the first side of the armrest box body and a second connecting rod mechanism close to the second side of the armrest box body, and the actuator comprises a first actuator connected to the first connecting rod mechanism and a second actuator connected to the second connecting rod mechanism.

In another embodiment, the first connecting rod mechanism comprises a first connecting rod and a second connecting rod which are connected to the first cover, and a third connecting rod and a fourth connecting rod which are connected to the second cover, and the first actuator comprises a first rod part and a second rod part which are extensible and retractable, wherein the first rod part is connected to the first connecting rod and the third connecting rod, and the second rod part is connected to the second connecting rod and the fourth connecting rod, and wherein the second connecting rod mechanism comprises a fifth connecting rod and a sixth connecting rod which are connected to the first cover, and a seventh connecting rod and an eighth connecting rod which are connected to the second cover, and the second actuator comprises a third rod part and a fourth rod part which are extensible and retractable, wherein the third rod part is connected to the fifth connecting rod and the seventh connecting rod, and the fourth rod part is connected to the sixth connecting rod and the eighth connecting rod.

In another embodiment, the armrest box assembly further comprises a second cover disposed below the first cover, and an actuating airbag apparatus disposed between the first cover and the second cover, the second cover being moveably connected to the armrest box body in order to open and close the opening; the actuating airbag apparatus comprises a first actuating airbag close to the first side of the armrest box body, and a second actuating airbag close to the second side of the armrest box body; the actuating airbag apparatus adjusts an inflation amount of the second actuating airbag to be greater than an inflation amount of the first actuating airbag such that the first cover moves to the first deflected position, and adjusts an inflation amount of the first actuating airbag to be greater than an inflation amount of the second actuating airbag such that the first cover moves to the second deflected position.

In another embodiment, in the first deflected position, a first side of the first cover is lower than a second side of the first cover, the first side being substantially parallel to a length direction of the armrest box body, wherein in the second deflected position, the first side of the first cover is higher than the second side of the first cover, the second side being substantially parallel to the length direction of the armrest box body.

In another embodiment, a tear line or flip-plate is disposed on the upper surface of the first cover, to facilitate the opening of the airbag.

In one embodiment, the armrest box safety airbag system further comprises a second cover disposed below the first cover, a first connecting rod mechanism and a second connecting rod mechanism disposed between the first cover and the second cover, and an actuator connected to the first and second connecting rod mechanisms; the first connecting rod mechanism is close to a first side of the armrest box body, the second connecting rod mechanism is close to a second side of the armrest box body, and the actuator comprises a first actuator connected to the first connecting rod mechanism and a second actuator connected to the second connecting rod mechanism.

In another embodiment, the controller is further configured to instruct the actuator to return the first cover to a normal position after a predetermined time.

In another embodiment, the armrest box safety airbag system further comprises a collision sensor, wherein the controller is further configured to instruct the gas generator to inflate the airbag in response to a signal of the collision sensor.

In another embodiment, the controller is further configured to instruct the actuator to lift the first cover to a predetermined position in response to a passenger body height signal received by a camera in the vehicle and in response to a signal of the collision sensor.

In another embodiment, the first seat is a driver seat, the second seat is a passenger seat, and the controller is further configured to instruct the actuator to move the first cover to the second deflected position in response to a signal of a second seat occupancy sensor and the signal of the first pre-collision sensor.

The armrest box safety airbag system comprises a vibrating apparatus disposed on the first cover, wherein the vibrating apparatus vibrates in response to signals of the first and second pre-collision sensors to remind a driver or passenger to remove his or her hand from the first cover.

According to another aspect of the present invention, an operating method for an armrest box safety airbag system according to claim 10 is provided.

In another embodiment, the method further comprises instructing the safety airbag system to open the safety airbag in response to a signal that the vehicle has suffered a collision.

In another embodiment, the method further comprises instructing the actuator to move the cover of the armrest box from the first deflected position or the second deflected position to a normal position in response to a signal that the vehicle has not suffered a collision.

In another embodiment, the cover of the armrest box comprises a first connecting rod mechanism and a second connecting rod mechanism connected to the actuator; the first connecting rod mechanism is close to a first side of the armrest box body, the second connecting rod mechanism is close to a second side of the armrest box body, and the actuator comprises a first actuator connected to the first connecting rod mechanism and a second actuator connected to the second connecting rod mechanism.

One or more features and/or advantages of the present invention will be obvious on the basis of one or more embodiments described in detail below in conjunction with the accompanying drawings.

### Brief Description of the Drawings

Fig. 1 is a sectional schematic drawing of a vehicle, showing an armrest box assembly according to one or more exemplary embodiments of the present invention installed between front seats of the vehicle.
Fig. 2 is a schematic drawing of the vehicle shown in fig. 1 when experiencing a right-side collision, showing the first cover of the armrest box assembly in a first deflected position and a safety airbag in an opened position.
Fig. 3 is a schematic drawing of the vehicle shown in fig. 1 when experiencing a left-side collision, showing the first cover of the armrest box assembly in a second deflected position and a safety airbag in an opened position.
Fig. 4A is a three-dimensional schematic drawing of the armrest box assembly shown in fig. 1, showing the first cover in a deflected position.
Fig. 4B is a three-dimensional schematic drawing of the armrest box assembly shown in fig. 4A, viewed from another angle.
Fig. 5A is a three-dimensional schematic drawing of an armrest box assembly according to another embodiment of the present invention, showing a first cover in a deflected position.
Fig. 5B is a three-dimensional schematic drawing of the armrest box assembly shown in fig. 5A, viewed from another angle.
Fig. 6 is a schematic drawing of a vehicle according to one or more embodiments of the present invention.
Fig. 7 is a system block diagram of an armrest box safety airbag system according to one or more embodiments of the present invention.
Fig. 8 is a control flow chart for an armrest box safety airbag system according to one or more embodiments of the present invention.

### Detailed Description of the Invention

Particular embodiments of the present invention are disclosed herein as required; however, it should be understood that the embodiments disclosed are merely examples of the present invention and may be implemented in multiple alternative forms. There is no need for the drawings to be drawn to scale; some features may be enlarged or reduced to show details of specific components. Thus, the particular structures and functional details disclosed here should not be interpreted as limitations, but are merely a representative basis for teaching those skilled in the art to implement the present invention in multiple forms.

When a vehicle suffers a lateral collision, the upper half of the body of the driver or a passenger will move in a direction opposite to that of the collision, due to the effect of inertia. Thus, the driver might come into contact with the passenger. An existing solution is to arrange a safety airbag between the seats to retard such movement; for example, the safety airbag is arranged on a central armrest box or on a seat. However, after opening, the safety airbag lacks effective support, resulting in limited effectiveness. In the armrest box assembly of the present invention, a safety airbag is disposed in a cover of an armrest box, and the armrest box cover is moveable between a first deflected position and a second deflected position. In the first deflected position, an upper surface of the cover faces in a first direction in order to provide support in the first direction as the safety airbag is opening; in the second deflected position, the upper surface of the cover faces in a second direction different from the first direction in order to provide support in the second direction as the safety airbag is opening. Thus, the armrest box assembly of the present invention can adjust the position of the cover according to the position of a lateral collision in order to provide improved protection during the lateral collision, and a safety airbag assembly can retard movement of the driver and passenger during the lateral collision.

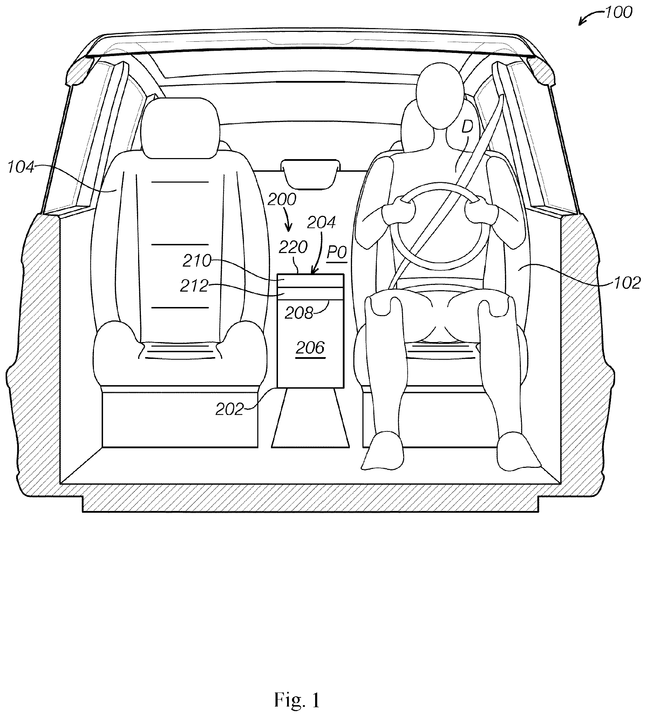

Fig. 1 shows a partial schematic drawing of a vehicle 100 implemented according to one or more examples of the present invention, showing an armrest box assembly 200 installed in the vehicle 100. In one or more embodiments, the vehicle 100 comprises a first seat 102, and a second seat 104 arranged side by side with the first seat 102. In one or more embodiments, the first seat 102 may for example be a driver seat, and the second seat 104 may for example be a passenger seat. The armrest box assembly 200 is located between the first seat 102 and the second seat 104 in order to provide storage space and support an elbow of a front-seat passenger or the driver.

In one or more embodiments, the armrest box assembly 200 comprises an armrest box body 202 and a cover 204 connected to the armrest box body 202. The armrest box body 202 comprises a receiving space 206 having an opening 208 in order to store articles, e.g. a bag or a driving licence, etc. The cover 204 can move between a first position and a second position and can thereby open or close the opening 208. For example, the cover 204 can pivot between the first position and the second position via a hinge mechanism and can thereby open or close the opening 208. In one or more embodiments, the cover 204 can slide between the first position and the second position via a slide rail mechanism and can thereby open or close the opening 208.

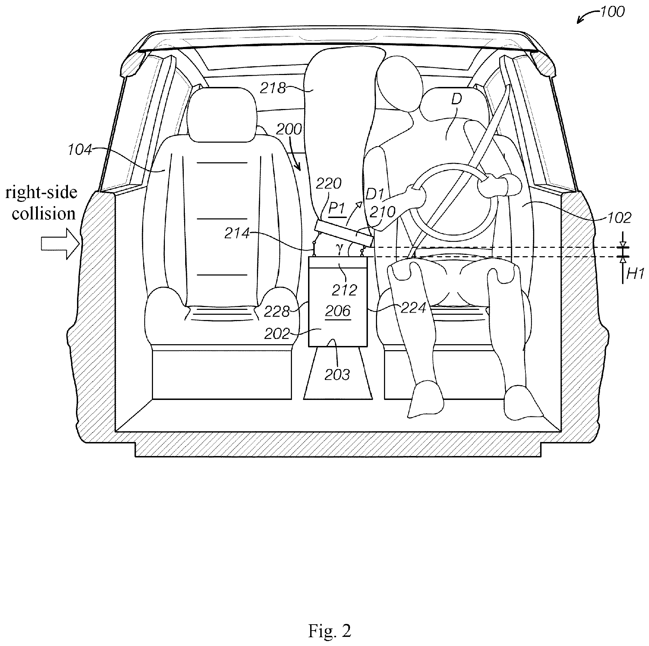

Further referring to figs. 2 - 4B, in one or more embodiments, the cover 204 further comprises a first cover 210 disposed above the armrest box body 202 and moveable relative to the armrest box body 202, a second cover 212 disposed below the first cover 210, a connecting rod mechanism 214 disposed between the first cover 210 and the second cover 212, and an actuator 216 connected to the connecting rod mechanism 214. The second cover 212 is moveably connected to the armrest box body 202 in order to open and close the opening 208.

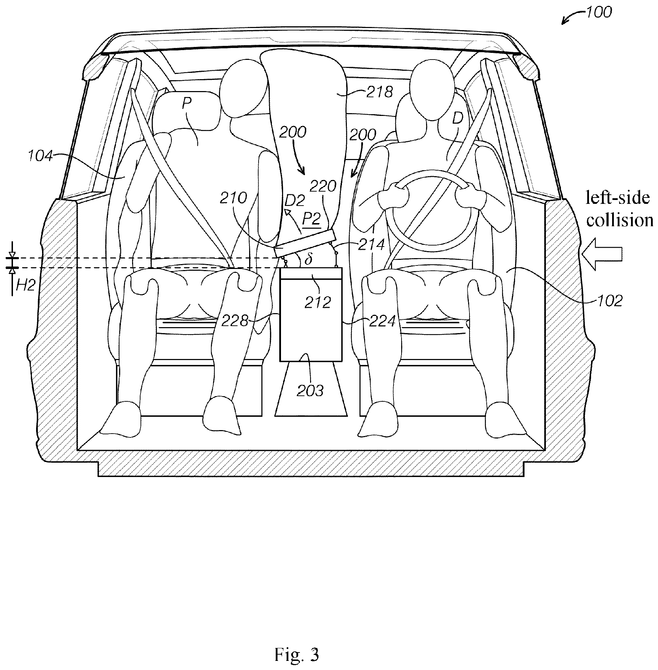

Referring to figs. 2 and 3, fig. 2 is a schematic drawing of the vehicle 100 shown in fig. 1 when experiencing a right-side (passenger-side) collision, showing the first cover 210 of the armrest box assembly 200 in a first deflected position P1 and a safety airbag 218 in an opened position. Fig. 3 is a schematic drawing of the vehicle 100 shown in fig. 1 when experiencing a left-side (driver-side) collision, showing the first cover 210 of the armrest box assembly 200 in a second deflected position P2 and the safety airbag 218 in an opened position. The first cover 210 is connected to the second cover 212 via the connecting rod mechanism 214 and can move between the first deflected position P1 and the second deflected position P2. In one or more embodiments, the armrest box assembly 200 further comprises a safety airbag assembly disposed in the first cover 210 of the cover 204. The safety airbag assembly comprises the safety airbag 218 and a gas generator (not shown) connected to the safety airbag 218. In the first deflected position P1, an upper surface 220 of the first cover 210 is deflected by a first angle γ relative to a bottom face 203 of the armrest box body at a first side 224 of the armrest box body 202, in order to provide support for the safety airbag 218 in a first direction D1 as the safety airbag 218 is opening. In the second deflected position P2, the upper surface 220 of the first cover 210 is deflected by a second angle δ relative to the bottom face 203 of the armrest box body 202 at a second side 228 of the armrest box body, in order to provide support for the safety airbag 218 in a second direction D2 as the safety airbag 218 is opening. The first direction D1 is different from the second direction D2. In one or more embodiments, the first direction D1 may be substantially towards the first seat 102, and the second direction D2 may be substantially towards the second seat 104.

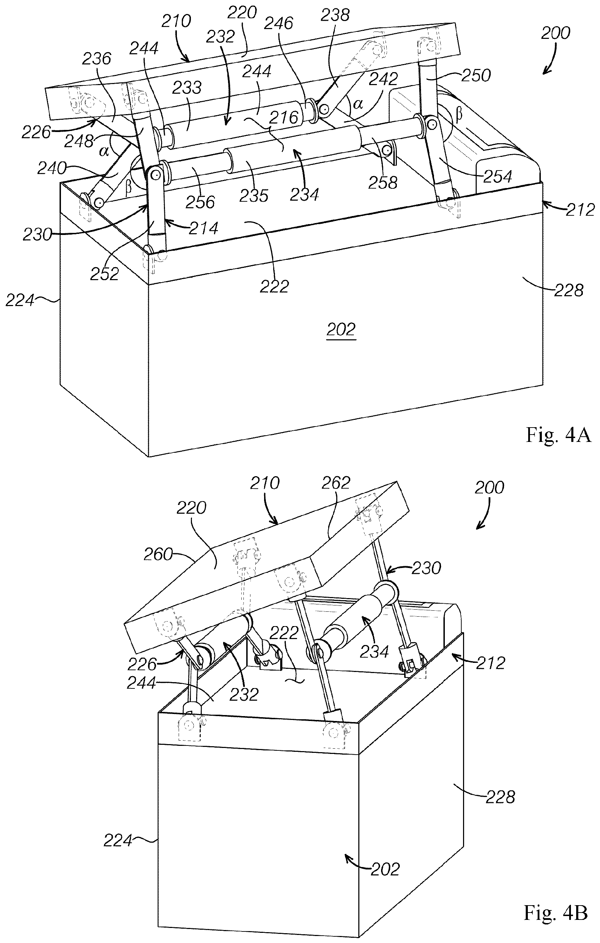

Referring to figs. 4A and 4B, fig. 4A is a three-dimensional schematic drawing of the armrest box assembly 200 shown in fig. 1, showing the first cover 210 in a deflected position, e.g. the first deflected position P1. Fig. 4B is a three-dimensional schematic drawing of the armrest box assembly 200 shown in fig. 4A, viewed from another angle. In one or more embodiments, the second cover 212 comprises a recess 222 for receiving the connecting rod mechanism 214 and the actuator 216, such that the connecting rod mechanism 214 and the actuator 216 are not visible when the first cover 210 is in a normal position P0, in order to improve the overall appearance. The term "normal position" means that the first cover 210 is in an undeflected position when there is no risk of a lateral collision. Fig. 1 shows the first cover 210 in the normal position P0. Furthermore, in one or more embodiments, the connecting rod mechanism 214 comprises a first connecting rod mechanism 226 close to the first side 224 of the armrest box body 202, and a second connecting rod mechanism 230 close to the second side 228 of the armrest box body 202. In one or more embodiments, the actuator 216 may be an electric linear actuator. The actuator 216 comprises a first actuator 232 connected to the first connecting rod mechanism 226 and a second actuator 234 connected to the second connecting rod mechanism 230.

In one or more embodiments, the first connecting rod mechanism 226 comprises a first connecting rod 236 and a second connecting rod 238 which are connected to the first cover 210, and a third connecting rod 240 and a fourth connecting rod 242 which are connected to the second cover 212. The first actuator 232 comprises a first body part 233, and a first rod part 244 and a second rod part 246 which are extensible and retractable relative to the first body part 233, wherein the first rod part 244 is connected to the first connecting rod 236 and the third connecting rod 240, and the second rod part 246 is connected to the second connecting rod 238 and the fourth connecting rod 242. The second connecting rod mechanism 230 comprises a fifth connecting rod 248 and a sixth connecting rod 250 which are connected to the first cover 210, and a seventh connecting rod 252 and an eighth connecting rod 254 which are connected to the second cover 212. The second actuator 234 comprises a second body part 235, and a third rod part 256 and a fourth rod part 258 which are extensible and retractable relative to the second body part 235, wherein the third rod part 256 is connected to the fifth connecting rod 248 and the seventh connecting rod 252, and the fourth rod part 258 is connected to the sixth connecting rod 250 and the eighth connecting rod 254.

When the first cover 210 is in the normal position P0, a first angle α between the first connecting rod 236 and the third connecting rod 240 of the first connecting rod mechanism 226 and a first angle α between the second connecting rod 238 and the fourth connecting rod 242, and a second angle β between the fifth connecting rod 248 and the seventh connecting rod 252 of the second connecting rod mechanism 230 and a second angle β between the sixth connecting rod 250 and the eighth connecting rod 254, are substantially the same and as small as possible so that the first connecting rod mechanism 226 and the second connecting rod mechanism 238 can be received without the need for a deeper recess 222. In one or more embodiments, in the normal position, the first angle α and the second angle β may be smaller than 30 degrees. As shown in the figures, the first rod part 244 and second rod part 246 of the first actuator 232 and the third rod part 256 and fourth rod part 258 of the second actuator 234 can move between a retracted position and extended positions in order to adjust the sizes of the first angle α and the second angle β. In one or more embodiments, an adjustment range of the first angle α and the second angle β may be 15 to 180 degrees. It should be understood that the adjustment range of the first angle α and the second angle β may be set as required.

When the first rod part 244 and second rod part 246 of the first actuator 232 and the third rod part 256 and fourth rod part 258 of the second actuator 234 are in the retracted position, the cover 210 is in the normal position P0. When the first rod part 244 and second rod part 246 of the first actuator 232 and the third rod part 256 and fourth rod part 258 of the second actuator 234 are in extended positions, and the first angle α and the second angle β are different, the first cover 210 is in a deflected position, i.e. the first deflected position P1 or the second deflected position P2. Specifically, when the first angle α is smaller than the second angle β, the first cover 210 is in the first deflected position P1. When the first angle α is larger than the second angle β, the first cover 210 is in the second deflected position P2. In the first deflected position P1, a first side 260 of the first cover 210 is lower than a second side 262 of the first cover 210, such that the first cover 210 has a first deflection angle γ relative to a horizontal plane or the second cover 212 (as shown in fig. 2). In the second deflected position P2, the first side 260 of the first cover 210 is higher than the second side 262 of the first cover 210, such that the first cover 210 has a second deflection angle δ relative to a horizontal plane or the second cover 212 (as shown in fig. 3). In one or more embodiments, a tear line or flip-plate is disposed on the upper surface 220 of the first cover 210, to facilitate the opening of the safety airbag 218.

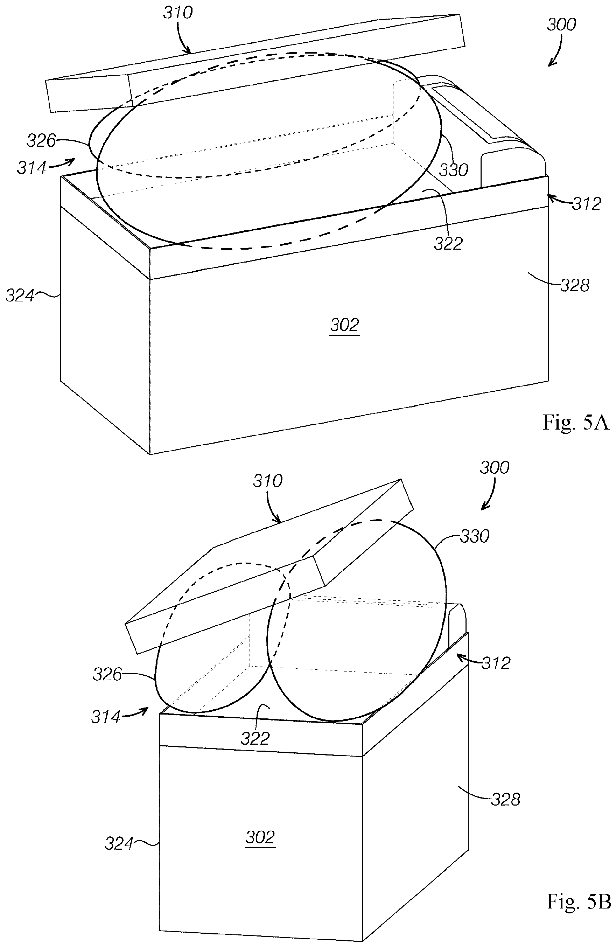

Further referring to figs. 5A and 5B, fig. 5A is a three-dimensional schematic drawing of an armrest box assembly 300 according to another embodiment of the present invention, showing a first cover 310 in a deflected position. Fig. 5B is a three-dimensional schematic drawing of the armrest box assembly 300 shown in fig. 5A, viewed from another angle. For simplicity, only parts different from the armrest box assembly 200 are described. In one or more embodiments, the armrest box assembly 300 may comprise the first cover 310 and a second cover 312. The armrest box assembly 300 may further comprise an actuating airbag apparatus 314 for deflecting the first cover 310. The actuating airbag apparatus 314 may be disposed between the first cover 310 and the second cover 312. In one or more embodiments, the second cover 312 comprises a recess 322 for receiving the actuating airbag apparatus 314, such that the actuating airbag apparatus 314 is not visible when the first cover 310 is in the normal position P0, in order to improve the overall appearance. In one or more embodiments, the actuating airbag apparatus 314 comprises a first actuating airbag 326 close to a first side 324 of an armrest box body 302, a second actuating airbag 330 close to a second side 328 of the armrest box body 302, and a gas generator (not shown) for inflating the first actuating airbag 326 and the second actuating airbag 330. The first actuating airbag 326 and the second actuating airbag 330 are connected to the first cover at a side close to the first cover 310, and are connected to the second cover 312 at another side close to the second cover 312. In other embodiments, at the first side 324 of the armrest box body 302, the first cover 310 may be pivotably connected to the second cover 312. At the second side 328 of the armrest box body 302, the first cover 310 may be pivotably connected to the second cover 312. The first cover 310 may be pivotably connected to the second cover 312 in any suitable manner, e.g. by a connecting rod mechanism (not shown). It should be understood that in order to reduce costs, the actuating airbag apparatus 314 may also share a gas generator with a safety airbag (not shown) of the armrest box assembly 300.

When the actuating airbag apparatus 314 is in an uninflated state, the first cover 310 is in the normal position P0. When it is necessary to deflect the first cover 310, inflation amounts of the first actuating airbag 326 and the second actuating airbag 330 may be adjusted by means of the gas generator. For example, in the first deflected position P1, the inflation amount of the second actuating airbag 330 is greater than the inflation amount of the first actuating airbag 326. In the second deflected position P2, the inflation amount of the first actuating airbag 326 is greater than the inflation amount of the second actuating airbag 330. At the same time, the adjustment of the inflation amounts of the first actuating airbag 326 and the second actuating airbag 330 may also change the height of the first cover 310, e.g. HI as shown in fig. 2 or H2 as shown in fig. 3.

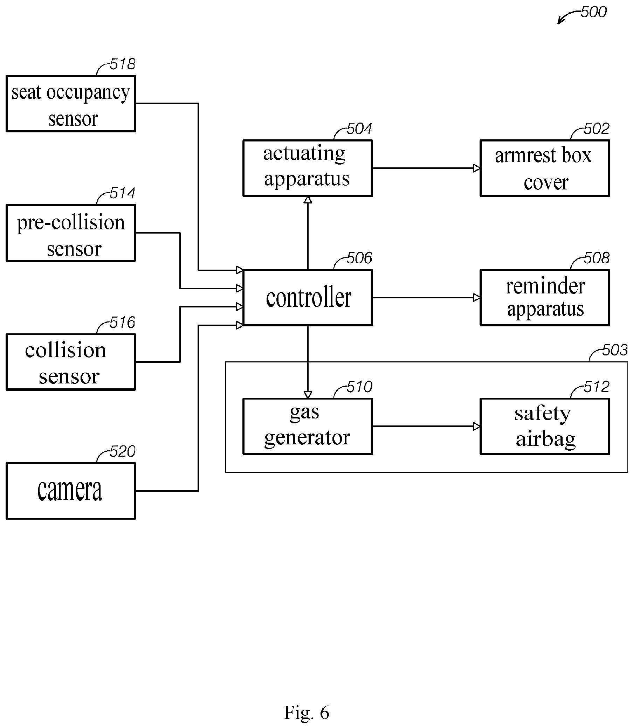

Further referring to fig. 6, fig. 6 is a system block diagram of an armrest box safety airbag system 500 according to one or more embodiments of the present invention. In one or more embodiments, the armrest box safety airbag system 500 comprises an armrest box cover 502, a safety airbag assembly 503 disposed in the armrest box cover 502, an actuating apparatus 504 connected to the armrest box cover 502 and used for actuating the armrest box cover 502, multiple sensors and a controller 506. The safety airbag assembly 503 may comprise a gas generator 510, a safety airbag 512, and other components for the safety airbag assembly that are used in the prior art.

The controller 506 is configured to control the actuating apparatus 504 and the safety airbag assembly 503 in response to signals of the multiple sensors. The controller 506 is a conventional microcomputer, for example comprising a microprocessor unit, an input/output port, a read-only memory, a random access memory, a keep-alive memory and a conventional data bus. In one or more embodiments, the controller 506 may be a dedicated controller for controlling movement of the armrest box cover 502. It should be understood that the controller 506 may also be a part of a vehicle system controller (VSC).

In one or more embodiments, the actuating apparatus 504 may be any suitable apparatus for deflecting the armrest box cover 502. The actuating apparatus 504 and the armrest box cover 502 may have a structure identical or similar to that of the armrest box assembly 200. For example, the actuating apparatus 504 may comprise the connecting rod mechanism 214 and the actuator 216 connected to the connecting rod mechanism 214 in figs. 4A and 4B for example. Of course, the actuating apparatus 504 may also be the actuating airbag apparatus 314 as shown in figs. 5A and 5B.

In one or more embodiments, the armrest box safety airbag system 500 may comprise a pre-collision sensor 514 and a collision sensor 516. In one or more embodiments, the pre-collision sensor 514 may be a radar sensor. In response to lateral collision risk information from the pre-collision sensor 514, the controller 506 controls deflection of the actuating apparatus 504 such that the armrest box cover 502 moves to a suitable position to provide suitable conditions for the safety airbag 512 to open, e.g. such that the armrest box cover 502 is deflected laterally by a certain angle to provide support for the safety airbag that will open.

The armrest box safety airbag system 500 comprises a reminder apparatus 508. The reminder apparatus 508 may be disposed on the armrest box cover 502 and be in communicative connection with the controller 506. The reminder apparatus is a vibrating apparatus. After receiving a signal that a lateral collision might occur from the pre-collision sensor 514, the controller 506 instructs the reminder apparatus 508 to activate the emission of vibration to remind the driver or passenger to remove his or her hand from the armrest box cover 502.

In one or more embodiments, the armrest box safety airbag system 500 may comprise a seat occupancy sensor 518. The seat occupancy sensor 518 may be any suitable sensor, e.g. a weight sensor or a pressure sensor. After receiving a signal emitted by the pre-collision sensor 514 that a collision might occur at the driver side, and a signal that the passenger seat is occupied, the controller 506 instructs the actuating apparatus 504 to deflect the armrest box cover 502 such that the upper surface of the armrest box cover 502 faces towards the passenger.

In one or more embodiments, the armrest box safety airbag system 500 may comprise a camera 520. The camera 520 may capture images of the driver and passenger to estimate the body heights of the driver and passenger, and determine an angle of rise or deflection of the armrest box cover 502 according to the body heights. The distance between the deflected armrest box cover 502 and the driver or passenger is related to a supporting force provided by the armrest box cover 502. For example, when the distance between the deflected armrest box cover 502 and the body of the driver or passenger (e.g. the passenger's shoulder) is smaller, the supporting force provided by the armrest box cover 502 is more effective. Thus, when the passenger's body height is greater, the armrest box cover 502 may rise a little higher such that a desired distance is maintained between the armrest box cover 502 and the passenger's shoulder.

It should be understood that the controller 506, the pre-collision sensor 514, the collision sensor 516, the seat occupancy sensor 518 and the camera 520 may also be part of a vehicle system; thus, in order to control the armrest box cover 502 without the need to additionally install these apparatuses, the cost and system complexity can be effectively reduced.

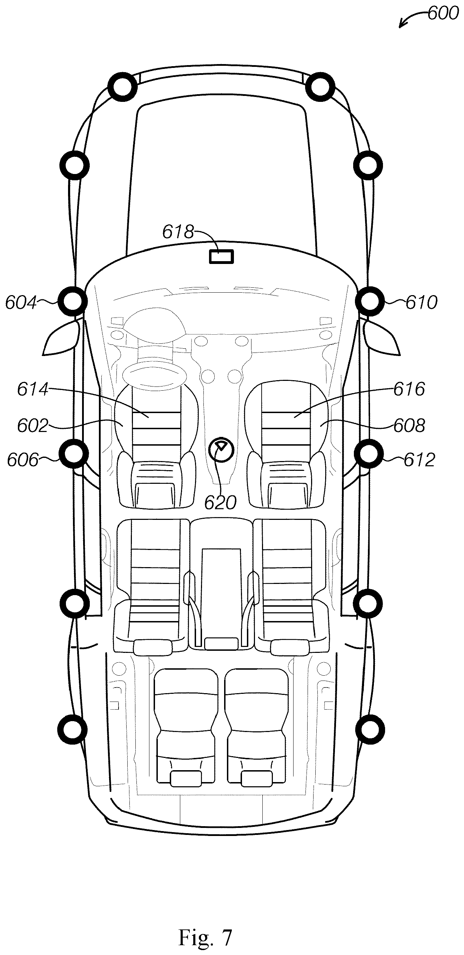

Referring to fig. 7, fig. 7 is a schematic drawing of a vehicle 600 according to one or more embodiments of the present invention. The vehicle 600 may comprise a first seat 602, a first pre-collision sensor 604 and a first collision sensor 606 which are located at a first seat side, a second seat 608, and a second pre-collision sensor 610 and a second collision sensor 612 which are located at a second seat side. The first pre-collision sensor 604 and the second pre-collision sensor 610 may be located at a front region of the vehicle 600, e.g. close to the Apillar. In one or more embodiments, the pre-collision sensors 604 and 610 may be radar sensors. The first pre-collision sensor 604 and the second pre-collision sensor 610 may be configured to detect an impact at an angle to a vehicle side and an impact at substantially 90 degrees to a vehicle side, and estimate a direction and position of a lateral collision. A controller of an armrest box safety airbag system may be in communicative connection with the first pre-collision sensor 604 and the second pre-collision sensor 610, and with the first collision sensor 606 and the second collision sensor 612.

In one or more embodiments, the vehicle 600 may comprise a first passenger occupancy sensor 614 located in the first seat 602, and a second passenger occupancy sensor 616 located in the second seat 608. In one or more embodiments, the first passenger occupancy sensor 614 and the second passenger occupancy sensor 616 may be weight sensors. The controller of the armrest box safety airbag system may be in communicative connection with the first passenger occupancy sensor 614 and the second passenger occupancy sensor 616.

In one or more embodiments, the vehicle 600 comprises a camera 618 located in the vehicle. The camera 618 may be disposed in a position close to a rear view mirror on a front window of the vehicle. The controller of the armrest box safety airbag system may be in communicative connection with the camera 618.

Furthermore, the vehicle 600 further comprises a reminder apparatus 620 located on an armrest box. The reminder apparatus 620 is vibrating apparatus.

In other embodiments, the reminder apparatus 620 may also be a combination of a vibrating apparatus and a voice alarm apparatus. The controller of the armrest box safety airbag system may be in communicative connection with the reminder apparatus 620. The controller is configured to receive signals from multiple sources and control the armrest box cover.

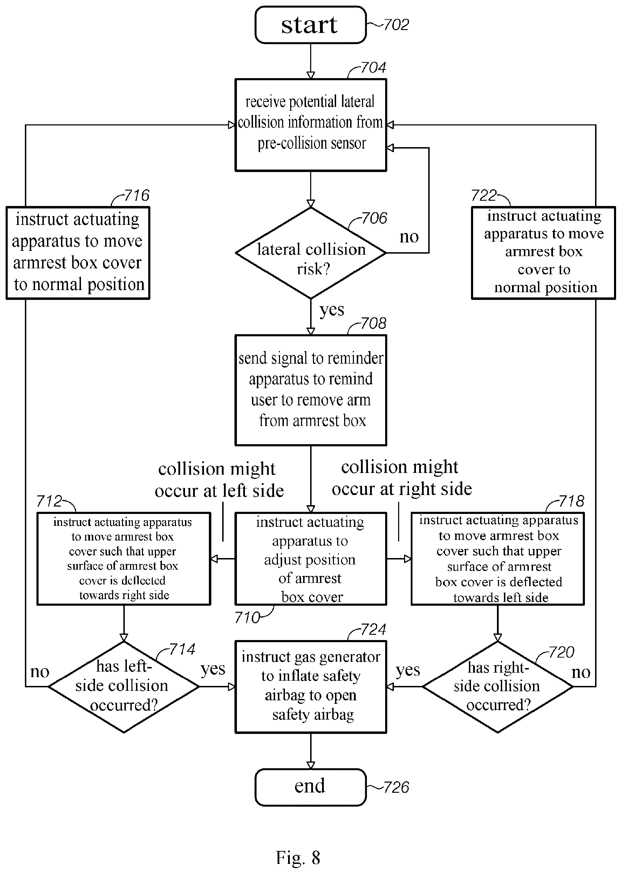

Fig. 8 is a control flow chart of a method 700 for controlling the armrest box safety airbag system 500 according to one or more embodiments of the present invention. The method 700 may be implemented by the armrest box safety airbag system 500 shown in fig. 5 and completed by a program configured in the controller 506. The method 700 may also be implemented by the armrest box safety airbag system shown in fig. 6. The method begins at 702. Method 700: using the armrest box safety airbag system shown in fig. 6, at 704, the method 700 receives information that a potential lateral collision may occur from the pre-collision sensor 514. For example, the controller 506 may receive information from the pre-collision sensor 514. Next, at 706, the method 700 determines whether there is a risk of a lateral collision. In one or more embodiments, the method 700 may make an estimation on the basis of a distance between the main vehicle 100 and a target vehicle detected by the pre-collision sensor 514 (e.g. radar sensor) located on a vehicle body, and whether a speed of the target vehicle relative to the main vehicle 100 exceeds a predetermined threshold. If the answer is negative, the method 700 returns to 704 to continue receiving potential lateral collision information from the pre-collision sensor 514. If the answer is positive, the method 700 proceeds to 708. At 708, the method 700 comprises sending a signal to the reminder apparatus 508 to remind a user (e.g. the driver or passenger) to remove his or her arm from the armrest box, thereby giving the user a favourable user experience. In one or more embodiments, if the answer is positive, the method 700 may proceed directly to 710.

Next, at 710, the method 700 further comprises instructing the actuating apparatus 504 to activate an operation to adjust a position of the armrest box cover 502. In a vehicle in which the driver is at the left side (as in the vehicle shown in fig. 7), the driver sits in the first seat or sits at the left side, and the passenger or a second passenger sits in the second seat or sits at the right side. In one or more embodiments, if the method 700 receives information that a collision might occur at the left side from the first pre-collision sensor at the first seat side (i.e. the driver side), and the method 700 receives a signal from the second passenger occupancy sensor that a passenger is present, then the method 700 proceeds to 712. At 712, the method 700 comprises instructing the actuating apparatus 504 to move the armrest box cover such that the upper surface of the armrest box cover is offset towards the right side (e.g. the second deflected position P2) so as to face towards the second seat 104 (as shown in fig. 3).

In one or more embodiments, the method 700 comprises receiving a body height signal of a passenger P from the camera 520 located in the vehicle, and in response to the body height signal of the passenger P, instructing the actuating apparatus 504 to lift the first cover 210 to a second predetermined height H2 and cause the first cover 210 to have the second deflection angle δ relative to a horizontal plane or the second cover 212. Thus, it should be understood that the sizes of the second predetermined height H2 and the second deflection angle δ may be adjusted according to the body height of the passenger P in order to provide a better protective effect. Of course, in other embodiments, it is also possible to omit the camera 520, and receive a signal of a weight sensor to estimate the body height of the passenger P, so as to adjust the position of the first cover.

Next, the method proceeds to 714. At 714, the method 700 determines whether a left-side collision has occurred by receiving a signal from the second collision sensor. If the answer is negative, then the method 700 proceeds to 716. At 716, the method 700 comprises instructing the actuating apparatus 504 to return the cover 210 to the normal position. Next, the method 700 returns to 704. If the answer at 714 of the method 700 is positive, then the method 700 proceeds to 724. At 724, the method 700 instructs the gas generator 510 to inflate the safety airbag 512 of the armrest box in order to open the safety airbag 512. For example, referring to fig. 3, the safety airbag 218 opens from the upper surface 220 of the first cover 210. The first cover 210 is deflected towards the second seat 104; thus, once the safety airbag 218 has opened, the first cover 210 can provide better support for the safety airbag 218 in order to resist movement of the passenger P towards the driver D. Next, the method 700 proceeds to 726 and ends.

If, at 710, the method 700 receives information emitted by the second pre-collision sensor 610 at the side of the second seat 608 that a collision might occur at the right side, then the method 700 proceeds to 718. At 718, the method 700 comprises instructing the actuating apparatus 504 to move the armrest box cover such that the upper surface of the armrest box cover is offset towards the left side (i.e. the first deflected position PI) so as to face towards the first seat 102 (as shown in fig. 2). Further referring to fig. 2, in one or more embodiments, the method 700 comprises receiving a body height signal of the driver D from the camera 618 located in the vehicle, and in response to the body height signal of the driver D, instructing the actuating apparatus 504 to lift the first cover 210 to a first predetermined height HI and cause the first cover 210 to have the first deflection angle γ relative to a horizontal plane or the second cover 212. Thus, it should be understood that the sizes of the first predetermined height H1 and the first deflection angle γ may be adjusted according to the body height of the driver D in order to provide a better protective effect. Of course, in other embodiments, it is also possible to omit the camera 520, and receive a signal of a weight sensor to estimate the body height of the driver D.

Next, the method proceeds to 720. At 720, the method 700 determines whether a right-side collision has occurred at the second seat side (passenger side) by receiving a signal from the second collision sensor. If the answer is negative, then the method 700 proceeds to 722. At 722, the method 700 comprises instructing the actuating apparatus 504 to return the cover 210 to the normal position. Next, the method 700 returns to 704. If the answer at 720 of the method 700 is positive, then the method 700 proceeds to 724. At 724, the method 700 comprises instructing the gas generator 510 to inflate the safety airbag 512 in order to open the safety airbag 512. For example, referring to fig. 2, the safety airbag 218 opens from the upper surface 220 of the first cover 210. The first cover 210 is deflected towards the first seat 102; thus, once the safety airbag 218 has opened, the first cover 210 can provide better support for the safety airbag 218 in order to resist movement of the driver D towards the second seat 104. Next, the method 700 proceeds to 726 and ends.

In the armrest box safety airbag system of the present invention, using a safety airbag assembly, a far-end safety airbag can be opened in the event of lateral collisions occurring at both the left and right sides, in order to retard movement of the driver and passenger during a lateral collision. The armrest box safety airbag system can adjust the cover of the armrest box according to whether the collision about to occur is at the left side or the right side. The offset and/or lifted cover provides stronger support for the opened safety airbag and enables the safety airbag to have a desired path. The pre-collision sensor detects and predicts a possible lateral collision to adjust the cover of the armrest box, such that the safety airbag system responds to a potential collision more proactively.

## Claims

1. An armrest box safety airbag system (500) for a vehicle (100, 600), comprising:
an armrest box assembly (200, 300), comprising:
an armrest box body (202, 302), comprising a receiving space (206) having an opening (208);
a first cover (210, 310) disposed above the armrest box body (202, 302) and moveable relative to the armrest box body (202, 302), the first cover (210, 310) being moveable between a first deflected position and a second deflected position;
a safety airbag (218, 512) disposed in the first cover (210, 310);
wherein in the first deflected position, an upper surface (220) of the first cover (210, 310) is deflected by a first angle relative to a bottom face (203) of the armrest box body (202, 302) at a first side (224, 260, 324) of the armrest box body (202, 302), in order to provide support in a first direction as the safety airbag (218, 512) is opening; and in the second deflected position, the upper surface (220) of the first cover (210, 310) is deflected by a second angle relative to the bottom face (203) of the armrest box body (202, 302) at a second side (228, 262, 328) of the armrest box body (202, 302), in order to provide support in a second direction as the safety airbag (218, 512) is opening
the armrest box assembly (200, 300) being disposed between a first seat (102, 602) and a second seat (104, 608), wherein in the first deflected position, an upper surface (220) of the first cover (210, 310) faces towards the first seat (102, 602), and in the second deflected position, the upper surface (220) of the first cover (210, 310) faces towards the second seat (104, 608);
the armrest box safety airbag system (500) further comprising:
an actuator (216) for actuating the first cover (210, 310);
a safety airbag assembly (503) disposed in the first cover (210, 310), the safety airbag assembly comprising the safety airbag (218, 512) and a gas generator (510) connected to the first and second actuating airbags (326, 330);
a first pre-collision sensor (604) close to the first seat (102, 602);
a second pre-collision sensor (610) close to the second seat (104, 608);
a controller (506), configured to instruct the actuator (216) to move the first cover (210, 310) to the first deflected position in response to a signal of the second pre-collision sensor (610), and to instruct the actuator (216) to move the first cover (210, 310) to the second deflected position in response to a signal of the first pre-collision sensor (604), and
a vibrating apparatus disposed on the first cover (210, 310), wherein the vibrating apparatus vibrates in response to signals of the first and second pre-collision sensors to remind a driver or passenger to remove his or her hand from the first cover (210, 310).

2. The armrest box safety airbag system (500) according to Claim 1, wherein the armrest box assembly (200, 300) further comprises a second cover (212, 312) disposed below the first cover (210, 310), a connecting rod mechanism (214) disposed between the first cover (210, 310) and the second cover (212, 312), and an actuator (216) connected to the connecting rod mechanism (214), the second cover (212, 312) being moveably connected to the armrest box body (202, 302) in order to open and close the opening (208).

3. The armrest box safety airbag system (500) according to Claim 2, wherein the connecting rod mechanism (214) comprises a first connecting rod mechanism (226) close to the first side (224, 260, 324) of the armrest box body (202, 302) and a second connecting rod mechanism (230) close to the second side (228, 262, 328) of the armrest box body (202, 302), and the actuator (216) comprises a first actuator (232) connected to the first connecting rod mechanism (226) and a second actuator (234) connected to the second connecting rod mechanism (230).

4. The armrest box safety airbag system (500) according to any of the preceding Claims, wherein the armrest box assembly (200, 300) further comprises a second cover (212, 312) disposed below the first cover (210, 310), and an actuating airbag apparatus (314) disposed between the first cover and the second cover, the second cover being moveably connected to the armrest box body (202, 302) in order to open and close the opening (208); the actuating airbag apparatus (314) comprises a first actuating airbag (326) close to the first side (224, 260, 324) of the armrest box body, and a second actuating airbag (330) close to the second side (228, 262, 328) of the armrest box body; the actuating airbag apparatus (314) adjusts an inflation amount of the second actuating airbag (330) to be greater than an inflation amount of the first actuating airbag (326) such that the first cover (210, 310) moves to the first deflected position, and adjusts an inflation amount of the first actuating airbag (326) to be greater than an inflation amount of the second actuating airbag (330) such that the first cover (210, 310) moves to the second deflected position.

5. The armrest box safety airbag system (500) according to any of the preceding Claims, wherein in the first deflected position, a first side (224, 260, 324) of the first cover (210, 310) is lower than a second side (228, 262, 328) of the first cover (210, 310), the first side (224, 260, 324) being substantially parallel to a length direction of the armrest box body (202, 302), wherein in the second deflected position, the first side (224, 260, 324) of the first cover (210, 310) is higher than the second side (228, 262, 328) of the first cover (210, 310), the second side (228, 262, 328) being substantially parallel to the length direction of the armrest box body (202, 302).

6. The armrest box safety airbag system (500) according to any of the preceding Claims, wherein the controller (506) is further configured to instruct the actuator (216) to return the first cover (210, 310) to a normal position after a predetermined time.

7. The armrest box safety airbag system (500) according to any of the preceding Claims, further comprising a collision sensor (516), wherein the controller (506) is further configured to instruct the gas generator (510) to inflate the airbag in response to a signal of the collision sensor (516).

8. The armrest box safety airbag system (500) according to any of the preceding Claims, wherein the controller (506) is further configured to instruct the actuator (216) to lift the first cover (210, 310) to a predetermined position in response to a passenger body height signal received by a camera (520, 618) in the vehicle (100, 600) and in response to a signal of the collision sensor (516).

9. The armrest box safety airbag system (500) according to any of the preceding Claims, wherein the first seat (102, 602) is a driver seat, the second seat (104, 608) is a passenger seat, and the controller (506) is further configured to instruct the actuator (216) to move the first cover (210, 310) to the second deflected position in response to a signal of a second seat (104, 608) occupancy sensor (518) and the signal of the first pre-collision sensor (604).

10. Operating method for an armrest box safety airbag system (500) of any of claims 1 to 9, the method comprising:
instructing an actuator (216) to move the cover (204) of the armrest box to a first deflected position such that an upper surface (220) of the cover (204) faces towards a driver seat in response to a signal that a passenger seat side will suffer a collision;
instructing the actuator (216) to move the cover (204) of the armrest box to a second deflected position such that the upper surface (220) of the cover (204) faces towards the passenger seat in response to a signal that a driver seat side will suffer a collision; and
instructing the vibrating apparatus located in the cover (204) to vibrate in response to a signal that the passenger seat side or the driver seat side will suffer a collision, in order to remind the passenger and driver to remove their hands from the armrest box.

11. The method according to Claim 10, further comprising instructing the safety airbag system to open the safety airbag (218, 512) in response to a signal that the vehicle (100, 600) has suffered a collision.

12. The method according to Claims 10 or 11, further comprising instructing the actuator (216) to move the cover (204) of the armrest box from the first deflected position or the second deflected position to a normal position in response to a signal that the vehicle (100, 600) has not suffered a collision.

## Patentansprüche

1. Armlehnenfach-Sicherheitsairbagsystem (500) für ein Fahrzeug (100, 600), umfassend: eine Armlehnenfach-Einheit (200, 300), umfassend:
ein Armlehnenfach-Gehäuse (202, 302), umfassend einen Aufnahmeraum (206), der eine Öffnung (208) aufweist;
eine erste Abdeckung (210, 310), die über dem Armlehnenfach-Gehäuse (202, 302) angeordnet und in Bezug auf das Armlehnenfach-Gehäuse (202, 302) bewegbar ist, wobei die erste Abdeckung (210, 310) zwischen einer ersten abgelenkten Position und einer zweiten abgelenkten Position bewegbar ist;
einen Sicherheitsairbag (218, 512), der in der ersten Abdeckung (210, 310) angeordnet ist;
wobei in der ersten abgelenkten Position eine obere Fläche (220) der ersten Abdeckung (210, 310) um einen ersten Winkel in Bezug auf eine Bodenfläche (203) des Armlehnenfach-Gehäuses (202, 302) an einer ersten Seite (224, 260, 324) des Armlehnenfach-Gehäuses (202, 302) abgelenkt ist, um eine Abstützung in einer ersten Richtung bereitzustellen, wenn der Sicherheitsairbag (218, 512) geöffnet wird;
und die obere Fläche (220) der ersten Abdeckung (210, 310) in der zweiten abgelenkten Position um einen zweiten Winkel in Bezug auf die Bodenfläche (203) des Armlehnenfach-Gehäuses (202, 302) auf einer zweiten Seite (228, 262, 328) des Armlehnenfach-Gehäuses (202, 302) abgelenkt ist, um eine Halterung in einer zweiten Richtung bereitzustellen, wenn der Sicherheitsairbag (218, 512) geöffnet wird,
wobei die Armlehnenfach-Anordnung (200, 300) zwischen einem ersten Sitz (102, 602) und einem zweiten Sitz (104, 608) angeordnet ist, wobei in der ersten abgelenkten Position eine obere Fläche (220) der ersten Abdeckung (210, 310) dem ersten Sitz (102, 602) zugewandt ist, und in der zweiten abgelenkten Position die obere Fläche (220) der ersten Abdeckung (210, 310) dem zweiten Sitz (104, 608) zugewandt ist;
das Armlehnenfach-Sicherheitsairbagsystem (500) ferner umfassend:
einen Aktuator (216) zum Auslösen der ersten Abdeckung (210, 310);
eine Sicherheitsairbag-Anordnung (503), die in der ersten Abdeckung (210, 310) angeordnet ist, wobei die Sicherheitsairbag-Anordnung den Sicherheitsairbag (218, 512) und einen Gasgenerator (510) umfasst, der mit dem ersten und dem zweiten auslösenden Airbag (326, 330) verbunden ist;
einen ersten Vorkollision-Sensor (604) in der Nähe des ersten Sitzes (102, 602); einen zweiten Vorkollision-Sensor (610) in der Nähe des zweiten Sitzes (104, 608);
eine Steuerung (506), die konfiguriert ist, um den Aktuator (216) anzuweisen, die erste Abdeckung (210, 310) als Reaktion auf ein Signal des zweiten Vorkollision-Sensors (610) in die erste abgelenkte Position zu bewegen, und den Aktuator (216) anzuweisen, die erste Abdeckung (210, 310) als Reaktion auf ein Signal des ersten Vorkollision-Sensors (604) in die zweite abgelenkte Position zu bewegen, und
eine Vibrationsvorrichtung, die an der ersten Abdeckung (210, 310) angeordnet ist, wobei die Vibrationsvorrichtung als Reaktion auf Signale des ersten und des zweiten Vorkollision-Sensors vibriert, um einen Fahrer oder Insassen daran zu erinnern, seine oder ihre Hand von der ersten Abdeckung (210, 310) zu entfernen.

2. Armlehnenfach-Sicherheitsairbagsystem (500) gemäß Anspruch 1, wobei die Armlehnenfach-Anordnung (200, 300) ferner eine zweite Abdeckung (212, 312), die unter der ersten Abdeckung (210, 310) angeordnet ist, einen Verbindungsstabmechanismus (214), der zwischen der ersten Abdeckung (210, 310) und der zweiten Abdeckung (212, 312) angeordnet ist, und einen Aktuator (216), der mit dem Verbindungsstabmechanismus (214) verbunden ist, umfasst, wobei die zweite Abdeckung (212, 312) bewegbar mit dem Armlehnenfach-Gehäuse (202, 302) verbunden ist, um die Öffnung (208) zu öffnen und zu schließen.

3. Armlehnenfach-Sicherheitsairbagsystem (500) gemäß Anspruch 2, wobei der Verbindungsstabmechanismus (214) einen ersten Verbindungsstabmechanismus (226) in der Nähe der ersten Seite (224, 260, 324) des Armlehnenfach-Gehäuses (202, 302) und einen zweiten Verbindungsstabmechanismus (230) in der Nähe der zweiten Seite (228, 262, 328) des Armlehnenfach-Gehäuses (202, 302) umfasst, und der Aktuator (216) einen ersten Aktuator (232), der mit dem ersten Verbindungsstabmechanismus (226) verbunden ist, und einen zweiten Aktuator (234), der mit dem zweiten Verbindungsstabmechanismus (230) verbunden ist, umfasst.

4. Armlehnenfach-Sicherheitsairbagsystem (500) gemäß einem der vorherigen Ansprüche, wobei die Armlehnenfach-Anordnung (200, 300) ferner eine zweite Abdeckung (212, 312), die unterhalb der ersten Abdeckung (210, 310) angeordnet ist, und eine auslösende Airbagvorrichtung (314), die zwischen der ersten Abdeckung und der zweiten Abdeckung angeordnet ist, umfasst, wobei die zweite Abdeckung bewegbar mit dem Armlehnenfach-Gehäuse (202, 302) verbunden ist, um die Öffnung (208) zu öffnen und zu schließen; die auslösende Airbagvorrichtung (314) einen ersten auslösenden Airbag (326) in der Nähe der ersten Seite (224, 260, 324) des Armlehnenfach-Gehäuses und einen zweiten auslösenden Airbag (330) in der Nähe der zweiten Seite (228, 262, 328) des Armlehnenfach-Gehäuses umfasst; die auslösende Airbagvorrichtung (314) eine Aufblasmenge des zweiten auslösenden Airbags (330) einstellt, um größer als eine Aufblasmenge des ersten auslösenden Airbags (326) zu sein, sodass sich die erste Abdeckung (210, 310) in die erste abgelenkte Position bewegt, und eine Aufblasmenge des ersten auslösenden Airbags (326) einstellt, um größer als eine Aufblasmenge des zweiten auslösenden Airbags (330) zu sein, sodass sich die erste Abdeckung (210, 310) in die zweite abgelenkte Position bewegt.

5. Armlehnenfach-Sicherheitsairbagsystem (500) gemäß einem der vorherigen Ansprüche, wobei eine erste Seite (224, 260, 324) der ersten Abdeckung (210, 310) in der ersten abgelenkten Position niedriger ist als eine zweite Seite (228, 262, 328) der ersten Abdeckung (210, 310), wobei die erste Seite (224, 260, 324) im Wesentlichen parallel zu einer Längsrichtung des Armlehnenfach-Gehäuses (202, 302) ist, wobei die erste Seite (224, 260, 324) der ersten Abdeckung (210, 310) in der zweiten ausgelenkten Position höher ist als die zweite Seite (228, 262, 328) der ersten Abdeckung (210, 310), wobei die zweite Seite (228, 262, 328) im Wesentlichen parallel zu der Längsrichtung des Armlehnenfach-Gehäuses (202, 302) ist.

6. Armlehnenfach-Sicherheitsairbagsystem (500) gemäß einem der vorherigen Ansprüche, wobei die Steuerung (506) ferner konfiguriert ist, um den Aktuator (216) anzuweisen, die erste Abdeckung (210, 310) nach einer vorbestimmten Zeit in eine normale Position zurückzustellen.

7. Armlehnenfach-Sicherheitsairbagsystem (500) gemäß einem der vorherigen Ansprüche, ferner umfassend einen Kollisionssensor (516), wobei die Steuerung (506) ferner konfiguriert ist, um den Gasgenerator (510) anzuweisen, den Airbag als Reaktion auf ein Signal des Kollisionssensors (516) aufzublasen.

8. Armlehnenfach-Sicherheitsairbagsystem (500) gemäß einem der vorherigen Ansprüche, wobei die Steuerung (506) ferner konfiguriert ist, um den Aktuator (216) anzuweisen, die erste Abdeckung (210, 310) als Reaktion auf ein Beifahrer-Körpergrößensignal, das von einer Kamera (520, 618) in dem Fahrzeug (100, 600) empfangen wird, und als Reaktion auf ein Signal des Kollisionssensors (516) in eine vorbestimmte Position anzuheben.

9. Armlehnenfach-Sicherheitsairbagsystem (500) gemäß einem der vorherigen Ansprüche, wobei der erste Sitz (102, 602) ein Fahrersitz ist, der zweite Sitz (104, 608) ein Beifahrersitz ist und die Steuerung (506) ferner konfiguriert ist, um den Aktuator (216) anzuweisen, die erste Abdeckung (210, 310) als Reaktion auf ein Signal eines Belegungssensors (518) eines zweiten Sitzes (104, 608) und das Signal des ersten Vorkollision-Sensors (604) in die zweite abgelenkte Position zu bewegen.

10. Betriebsverfahren für ein Armlehnenfach-Sicherheitsairbagsystem (500) gemäß einem der Ansprüche 1 bis 9, das Verfahren umfassend:
Anweisen eines Aktuators (216), die Abdeckung (204) des Armlehnenfachs in eine erste abgelenkte Position zu bewegen, sodass eine obere Fläche (220) der Abdeckung (204) einem Fahrersitz zugewandt ist, als Reaktion auf ein Signal, dass eine Beifahrersitzseite eine Kollision erleiden wird;
Anweisen des Aktuators (216), die Abdeckung (204) des Armlehnenfachs in eine zweite abgelenkte Position zu bewegen, sodass die obere Fläche (220) der Abdeckung (204) dem Beifahrersitz zugewandt ist, als Reaktion auf ein Signal, dass eine Fahrersitzseite eine Kollision erleiden wird; und
Anweisen der Vibrationsvorrichtung, die sich in der Abdeckung (204) befindet, als Reaktion auf ein Signal, dass die Beifahrersitzseite oder die Fahrersitzseite eine Kollision erleiden wird, zu vibrieren, um den Beifahrer und Fahrer daran zu erinnern, seine Hände aus dem Armlehnenfach zu nehmen.

11. Verfahren gemäß Anspruch 10, ferner umfassend ein Anweisen des Sicherheitsairbagsystems, den Sicherheitsairbag (218, 512) als Reaktion auf ein Signal zu öffnen, dass das Fahrzeug (100, 600) eine Kollision erlitten hat.

12. Verfahren gemäß Anspruch 10 oder 11, ferner umfassend ein Anweisen des Aktuators (216), die Abdeckung (204) des Armlehnenfachs aus der ersten abgelenkten Position oder der zweiten abgelenkten Position in eine normale Position zu bewegen, als Reaktion auf ein Signal, dass das Fahrzeug (100, 600) keine Kollision erlitten hat.

## Revendications

1. Un système de coussin gonflable de sécurité de boîte d'accoudoir (500) pour un véhicule (100, 600), comprenant :
un ensemble boîte d'accoudoir (200, 300), comprenant :
un corps de boîte d'accoudoir (202, 302), comprenant un espace de réception (206) ayant une ouverture (208) ;
un premier couvercle (210, 310) disposé au-dessus du corps de boîte d'accoudoir (202, 302) et mobile par rapport au corps de boîte d'accoudoir (202, 302), le premier couvercle (210, 310) étant mobile entre une première position déviée et une deuxième position déviée ;
un coussin gonflable de sécurité (218, 512) disposé dans le premier couvercle (210, 310) ;
dans lequel, dans la première position déviée, une surface supérieure (220) du premier couvercle (210, 310) est déviée d'un premier angle par rapport à une face inférieure (203) du corps de boîte d'accoudoir (202, 302) au niveau d'un premier côté (224, 260, 324) du corps de boîte d'accoudoir (202, 302), afin de fournir un support dans une première direction lorsque le coussin gonflable de sécurité (218, 512) s'ouvre ; et dans la deuxième position déviée, la surface supérieure (220) du premier couvercle (210, 310) est déviée d'un deuxième angle par rapport à la face inférieure (203) du corps de boîte d'accoudoir (202, 302) au niveau d'un deuxième côté (228, 262, 328) du corps de boîte d'accoudoir (202, 302), afin de fournir un support dans une deuxième direction lorsque le coussin gonflable de sécurité (218, 512) s'ouvre l'ensemble boîte d'accoudoir (200, 300) étant disposé entre un premier siège (102, 602) et un deuxième siège (104, 608), dans lequel dans la première position déviée, une surface supérieure (220) du premier couvercle (210, 310) est orientée vers le premier siège (102, 602), et dans la deuxième position déviée, la surface supérieure (220) du premier couvercle (210, 310) est orientée vers le deuxième siège (104, 608) ;
le système de coussin gonflable de sécurité de boîte d'accoudoir (500) comprenant en outre :
un actionneur (216) pour actionner le premier couvercle (210, 310) ;
un ensemble coussin gonflable de sécurité (503) disposé dans le premier couvercle (210, 310), l'ensemble coussin gonflable de sécurité comprenant le coussin gonflable de sécurité (218, 512) et un générateur de gaz (510) relié aux premier et deuxième coussins gonflables d'actionnement (326, 330),
un premier capteur de précollision (604) proche du premier siège (102, 602) ;
un deuxième capteur de précollision (610) proche du deuxième siège (104, 608) ;
un contrôleur (506), configuré pour ordonner à l'actionneur (216) de déplacer le premier couvercle (210, 310) vers la première position déviée en réponse à un signal du deuxième capteur de précollision (610), et pour ordonner à l'actionneur (216) de déplacer le premier couvercle (210, 310) vers la deuxième position déviée en réponse à un signal du premier capteur de précollision (604), et
un appareil vibrant disposé sur le premier couvercle (210, 310), dans lequel l'appareil vibrant vibre en réponse aux signaux des premier et deuxième capteurs de précollision pour rappeler à un conducteur ou à un passager de retirer sa main du premier couvercle (210, 310).

2. Le système de coussin gonflable de sécurité de boîte d'accoudoir (500) selon la revendication 1, dans lequel l'ensemble boîte d'accoudoir (200, 300) comprend en outre un deuxième couvercle (212, 312) disposé sous le premier couvercle (210, 310), un mécanisme de tige de liaison (214) disposé entre le premier couvercle (210, 310) et le deuxième couvercle (212, 312), et un actionneur (216) relié au mécanisme de tige de liaison (214), le deuxième couvercle (212, 312) étant relié de manière mobile au corps de boîte d'accoudoir (202, 302) afin d'ouvrir et de fermer l'ouverture (208).

3. Le système de coussin gonflable de sécurité de boîte d'accoudoir (500) selon la revendication 2, dans lequel le mécanisme de tige de liaison (214) comprend un premier mécanisme de tige de liaison (226) proche du premier côté (224, 260, 324) du corps de boîte d'accoudoir (202, 302) et un deuxième mécanisme de tige de liaison (230) proche du deuxième côté (228, 262, 328) du corps de boîte d'accoudoir (202, 302), et l'actionneur (216) comprend un premier actionneur (232) relié au premier mécanisme de tige de liaison (226) et un deuxième actionneur (234) relié au deuxième mécanisme de tige de liaison (230).

4. Le système de coussin gonflable de sécurité de boîte d'accoudoir (500) selon l'une quelconque des revendications précédentes, dans lequel l'ensemble boîte d'accoudoir (200, 300) comprend en outre un deuxième couvercle (212, 312) disposé sous le premier couvercle (210, 310), et un appareil de coussin gonflable d'actionnement (314) disposé entre le premier couvercle et le deuxième couvercle, le deuxième couvercle étant relié de manière mobile au corps de boîte d'accoudoir (202, 302) afin d'ouvrir et de fermer l'ouverture (208) ; l'appareil de coussin gonflable d'actionnement (314) comprend un premier coussin gonflable d'actionnement (326) proche du premier côté (224, 260, 324) du corps de boîte d'accoudoir, et un deuxième coussin gonflable d'actionnement (330) proche du deuxième côté (228, 262, 328) du corps de boîte d'accoudoir ; l'appareil de coussin gonflable d'actionnement (314) ajuste une quantité de gonflage du deuxième coussin gonflable d'actionnement (330) pour être supérieure à une quantité de gonflage du premier coussin gonflable d'actionnement (326) de sorte que le premier couvercle (210, 310) se déplace vers la première position déviée, et ajuste une quantité de gonflage du premier coussin gonflable d'actionnement (326) pour être supérieure à une quantité de gonflage du deuxième coussin gonflable d'actionnement (330) de sorte que le premier couvercle (210, 310) se déplace vers la deuxième position déviée.

5. Le système de coussin gonflable de sécurité de boîte d'accoudoir (500) selon l'une quelconque des revendications précédentes, dans lequel dans la première position déviée, un premier côté (224, 260, 324) du premier couvercle (210, 310) est plus bas qu'un deuxième côté (228, 262, 328) du premier couvercle (210, 310), le premier côté (224, 260, 324) étant sensiblement parallèle à une direction longitudinale du corps de boîte d'accoudoir (202, 302), dans lequel dans la deuxième position déviée, le premier côté (224, 260, 324) du premier couvercle (210, 310) est plus haut que le deuxième côté (228, 262, 328) du premier couvercle (210, 310), le deuxième côté (228, 262, 328) étant sensiblement parallèle à la direction longitudinale du corps de boîte d'accoudoir (202, 302).

6. Le système de coussin gonflable de sécurité de boîte d'accoudoir (500) selon l'une quelconque des revendications précédentes, dans lequel le contrôleur (506) est en outre configuré pour ordonner à l'actionneur (216) de ramener le premier couvercle (210, 310) à une position normale après un temps prédéterminé.

7. Le système de coussin gonflable de sécurité de boîte d'accoudoir (500) selon l'une quelconque des revendications précédentes, comprenant en outre un capteur de collision (516), dans lequel le contrôleur (506) est en outre configuré pour ordonner au générateur de gaz (510) de gonfler le coussin gonflable en réponse à un signal du capteur de collision (516).

8. Le système de coussin gonflable de sécurité de boîte d'accoudoir (500) selon l'une quelconque des revendications précédentes, dans lequel le contrôleur (506) est en outre configuré pour ordonner à l'actionneur (216) de lever le premier couvercle (210, 310) vers une position prédéterminée en réponse à un signal de hauteur de corps de passager reçu par une caméra (520, 618) dans le véhicule (100, 600) et en réponse à un signal du capteur de collision (516).

9. Le système de coussin gonflable de sécurité de boîte d'accoudoir (500) selon l'une quelconque des revendications précédentes, dans lequel le premier siège (102, 602) est un siège conducteur, le deuxième siège (104, 608) est un siège passager, et le contrôleur (506) est en outre configuré pour ordonner à l'actionneur (216) de déplacer le premier couvercle (210, 310) vers la deuxième position déviée en réponse à un signal d'un capteur d'occupation (518) du deuxième siège (104, 608) et au signal du premier capteur de précollision (604).

10. Procédé de fonctionnement d'un système de coussin gonflable de sécurité de boîte d'accoudoir (500) selon l'une quelconque des revendications 1 à 9, le procédé comprenant :
ordonner à un actionneur (216) de déplacer le couvercle (204) de la boîte d'accoudoir vers une première position déviée de sorte qu'une surface supérieure (220) du couvercle (204) soit orientée vers un siège conducteur en réponse à un signal indiquant qu'un côté du siège passager va subir une collision ;
ordonner à l'actionneur (216) de déplacer le couvercle (204) de la boîte d'accoudoir vers une deuxième position déviée de sorte que la surface supérieure (220) du couvercle (204) soit orientée vers le siège passager en réponse à un signal indiquant qu'un côté du siège conducteur va subir une collision ; et
ordonner à l'appareil vibrant situé dans le couvercle (204) de vibrer en réponse à un signal indiquant que le côté du siège passager ou le côté du siège conducteur va subir une collision, afin de rappeler au passager et au conducteur de retirer leurs mains de la boîte d'accoudoir.

11. Le procédé selon la revendication 10, comprenant en outre l'instruction au système de coussin de sécurité d'ouvrir le coussin de sécurité (218, 512) en réponse à un signal indiquant que le véhicule (100, 600) a subi une collision.

12. Le procédé selon les revendications 10 ou 11, comprenant en outre l'instruction à l'actionneur (216) de déplacer le couvercle (204) de la boîte d'accoudoir de la première position déviée ou de la deuxième position déviée à une position normale en réponse à un signal indiquant que le véhicule (100, 600) n'a pas subi de collision.
